Europäisches Patentamt

European Patent Office

Office européen des brevets

(19)

(11) Veröffentlichungsnummer : **0 123 202**
**B1**

(12)                        EUROPÄISCHE PATENTSCHRIFT

(45) Veröffentlichungstag der Patentschrift :
12.11.86

(51) Int. Cl.⁴ : **B 23 K 11/00**

(21) Anmeldenummer : 84104010.8

(22) Anmeldetag : 10.04.84

(54) **Vorrichtung zum Widerstandsschweissen.**

(30) Priorität : 22.04.83 DE 3314646

(43) Veröffentlichungstag der Anmeldung :
31.10.84 Patentblatt 84/44

(45) Bekanntmachung des Hinweises auf die Patenterteilung : 12.11.86 Patentblatt 86/46

(84) Benannte Vertragsstaaten :
FR GB IT SE

(56) Entgegenhaltungen :
DE-C- 2 717 453
FR-A- 2 426 528
US-A- 2 274 122
US-A- 2 474 340

(73) Patentinhaber : BAYERISCHE MOTOREN WERKE
Aktiengesellschaft
Postfach 40 02 40 Petuelring 130
D-8000 München 40 (DE)

(72) Erfinder : Jovanovic, Milenko
Weissenburgerstrasse 1
D-8900 Augsburg (DE)

(74) Vertreter : Dexheimer, Rolf et al
Bayerische Motoren Werke Aktiengesellschaft Postfach 40 02 40 Petuelring 130 - AJ-21
D-8000 München 40 (DE)

## Beschreibung

Die Erfindung bezieht sich auf eine Vorrichtung zum Widerstandsschweißen nach dem Oberbegriff von Patentanspruch 1.

Derartige Vorrichtungen sind beispielsweise aus der US-PS 2 474 340 bekannt, wo die Schweißelektrode gegen die Wirkung einer Feder in Richtung der Elektrodenachse gegenüber dem Schwenkarm begrenzt längs verschiebbar ist.

Aus der DE-PS 27 17 453 ist es auch schon bekannt, einen Halter für die Schweißelektrode vorzusehen, der gegenüber dem eigentlichen Schwenkarm gegen Federkraft um eine Achse schwenkbar ist, die jedoch vergleichsweise nahe an der Schwenkachse des Schwenkarms liegt.

Insbesondere bei Widerstandsschweißvorrichtungen nach der zuletzt genannten Schrift, bei denen der die Schweißelektrode tragende Schwenkarm eine durch einen Schweißroboter geführte sogenannte Halbzange bildet, die gegen stationäres Unterkupfer arbeitet, treten im praktischen Betrieb noch Schwierigkeiten auf. Die Schwenkachse des Schwenkarms bildet dabei die « letzte » Drehachse des mit vielen Drehachsen und Freiheitsgraden arbeitenden Schweißroboters. Durch unvermeidliche Elastizitäten des gesamten Robotergestells und durch Lagerspiel in den Drehachsen kann im Verlauf des Andrückens der Schweißelektrode auf die zu verschweißenden Bleche wegen der nicht unbeträchtlichen Schweißkraft die Schwenkachse des Schwenkarms relativ zu der bereits auf den Blechen fest aufsitzenden Elektrodenspitze sich verlagern. Hierdurch wird die Schweißelektrode, die auf dem Blech nicht mehr seitlich nachrutschen kann und soll, starken seitlichen Kräften unterworfen, was einen erhöhten Verschleiß aber auch eine Verformung der Schweißelektrode bewirkt, so daß die Wiederholgenauigkeit beeinträchtigt ist und ein störungsfreier Betrieb nur über kurze Zeit möglich ist.

Der Erfindung liegt die Aufgabe zugrunde, eine Vorrichtung zum Widerstandsschweißen nach dem Oberbegriff des Patentanspruchs 1 zu schaffen, mit der die auf die Schweißelektrode ausgeübten Biegemomente deutlich verringert werden können und eine große Punktwiederholgenauigkeit sowie eine hohe Standzeit der Schweißelektrode möglich ist.

Diese Aufgabe wird erfindungsgemäß mit einer Vorrichtung nach den Merkmalen des Patentanspruchs 1 gelöst.

Durch das etwa in der Elektrodenachse liegende Gelenk, um das die Schweißelektrode gegenüber dem Schwenkarm gegen Federkraft begrenzt verschwenkbar ist, wirkt sich eine durch Maschinenelastizitäten und dergleichen verursachte geringfügige Änderungen des Abstandes der Schwenkarmachse zu der Elektrodenspitze nur mehr lediglich dahingehend aus, daß der zwischen dem Schwenkarm und der Schweißelektrode in Normalstellung eingeschlossene Winkel sich im erforderlichen Maß verändert, also nicht mehr wie bei den bisher bekannten Bauarten starr bleibt. Dies führt zu einer deutlichen Reduzierung der vom Schwenkarm auf die Schweißelektrode ausgeübten Biegebeanspruchungen.

Bei dem bevorzugten Ausführungsbeispiel ist das Gelenk ein Drehgelenk mit einer zur Elektrodenachse senkrechten Drehachse, die parallel zur Schwenkachse des Schwenkarms verläuft. Das weiter oben beschriebene « Auswandern » der letzten Drehachse des Schweißroboters unter der Wirkung des Anpreßdrucks der Elektrode auf die zu verschweißenden Bleche erfolgt häufig zumindest annähernd in der Schwenkebene des Schwenkarms, so daß die das Verbiegen der Elektroden verhindernde Relativ-Verschwenkung der Schweißelektrode zum Schwenkarms durch die beschriebene Lage der Drehachsen in der gleichen Ebene erfolgen kann.

Nach einer weiteren vorteilhaften Ausgestaltung ist die Schweißelektrode in einem Schwenkbock aufgenommen, der seinerseits gegenüber dem Schwenkarm begrenzt gegen die Wirkung einer Feder verschwenkbar ist. Dabei haben zweckmäßig der Schwenkbock und der Schwenkarm einander zugeordnete feste Anschlagflächen, gegen die der Schwenkbock und der Schwenkarm in Ruhestellung durch das Federelement aneinandergepreßt sind. Hierdurch ist gewährleistet, daß die Schweißspitze trotz ihrer begrenzten Verschwenkbarkeit gegenüber dem Schwenkarm zumindest in der Ausgangsstellung eine stets genau definierte Lage zum Schwenkarm hat. Die Elektrode nimmt also beim Anfahren der jeweiligen Schweißposition eine stets eindeutige Ausgangsstellung ein.

Weitere vorteilhafte Einzelheiten der Erfindung, die auch Gegenstand von Unteransprüchen sind, sind im folgenden anhand zweier in der Zeichnung dargestellter Ausführungsbeispiele näher erläutert. Es zeigen :

Figur 1 Eine Seitenansicht — teilweise im Schnitt — des Schwenkarms einer ersten Ausführungsform der Erfindung ;

Figur 2 einen Schnitt nach der Linie II-II in Fig. 1 und

Figur 3 eine der Fig. 1 entsprechende Ansicht eines zweiten Ausführungsbeispiels.

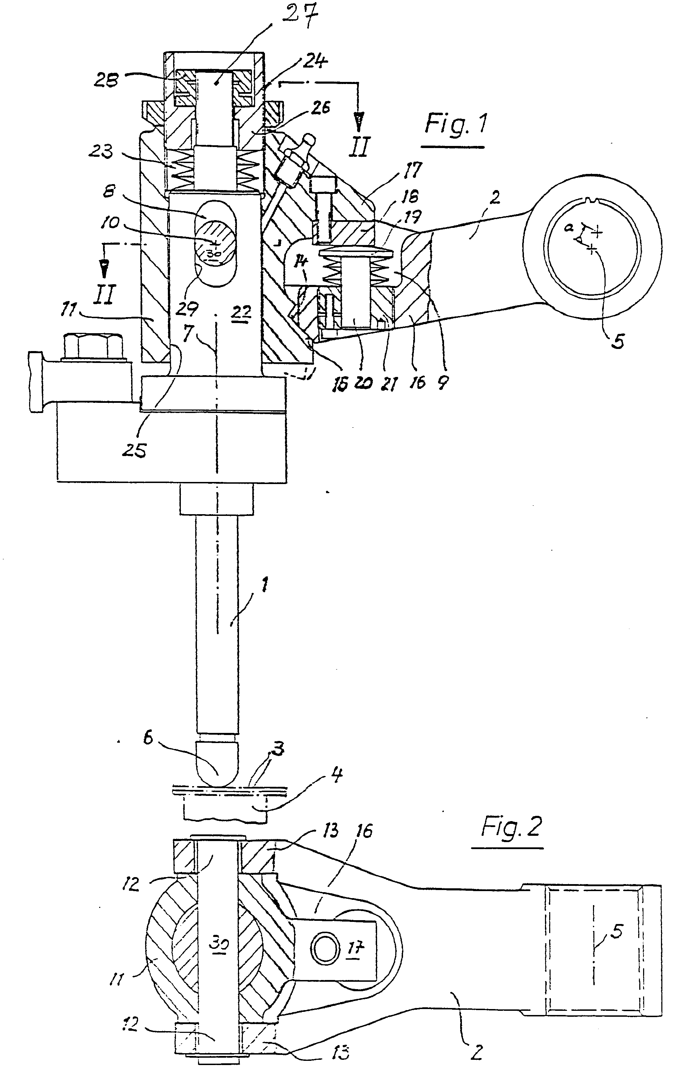

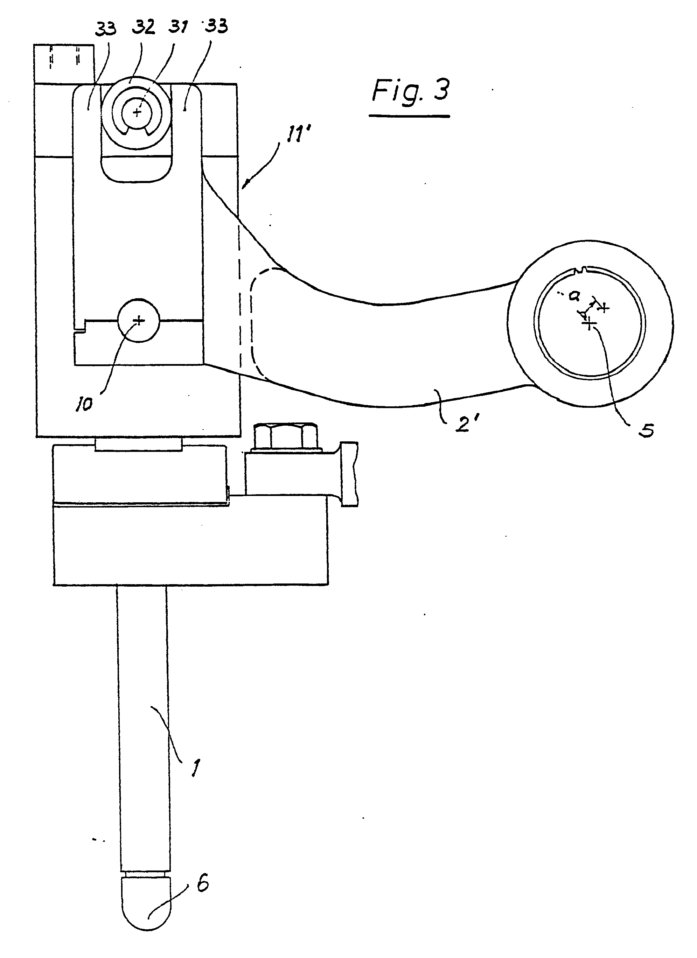

Von der Vorrichtung zum Widerstandsschweißen ist in den Zeichnungen nur der die Schweißelektrode 1 tragende Schwenkarm 2 (Fig. 1 und 2) bzw. 2' (Fig. 3) dargestellt. Die Vorrichtung dient zum Verschweißen von Blechen 3, die in Fig. 1 zwischen dem Unterkupfer 4 und der Schweißelektrode 1 angedeutet sind.

Der Schwenkarm 2 ist um die Achse 5 antreibbar, um die Schweißelektrode 1 an die Bleche 3 heranzuführen und den erforderlichen Schweißdruck ausüben zu können. Insbesondere dann, wenn der Schwenkarm 2 am Ende eines mit mehreren Gelenken versehenen und in einem Maschinengestell verfahrbaren Schweißroboters angeordnet ist, ist es unvermeidlich, daß die « letzte » Schwenkachse 5 unter der Reaktionskraft der am Schweißgut ausgeübten Anpreßkraft auswandert, wie es in Fig. 1 beispielsweise durch die Strecke a in übertrieben großem Maßstab angedeutet ist. Dieses Auswandern würde zu einer starken Biegebeanspruchung der bereits mit einem beträchtlichen Anpreßdruck auf die Bleche 3 aufgesetzten Schweißelektrode 1 führen. Dies führt nicht nur zu einer vorzeitigen Zerstörung der Schweißelektrode 1, sondern auch — wenn sie verbogen worden ist — zu einer ungenügenden Wiederholgenauigkeit der Punktschweißung. Wenn es zu einem seitlichen Wegrutschen der Elektrodenspitze kommt (« Radieren »), tritt ein beträchtlicher zusetzlicher Verschleiß auf, wobei außerdem der Schweißpunkt an der falschen Stelle gesetzt wird.

Die Schweißelektrode 1, die ungefähr senkrecht zur Längserstreckung des Schwenkarms 2 verläuft, ist daher um ein etwa in der Elektrodenachse 7 angeordnetes Gelenk 8 gegenüber dem Schwenkarm 2 gegen Federkraft begrenzt verschwenkbar.

Die im folgenden noch näher erläuterte Federkraft — das Tellerfederpaket 9 — sorgt einerseits dafür, daß die Schweißelektrode 1 in Ausgangslage (bis zum Aufsetzen auf das Schweißgut) eine genau definierte Lage relativ zum Schwenkarm 2 einnimmt, was für die Punktgenauigkeit beim Schweißen wichtig ist. Andererseits gestattet aber die Federkraft ein begrenztes Verschwenken der Schweißelektrode 1 relativ zum Schwenkarm 2, so daß beim Auswandern der « letzten » Schwenkachse 5, beispielsweise in Richtung der Strecke a, sich der Winkel zwischen der Schweißelektrode 1 und dem Schwenkarm 3 vergrößern kann. Dies führt zu einer beträchtlichen Reduzierung der weiter oben geschilderten schädlichen Beanspruchungen der Schweißelektrode und vermeidet das ebenfalls angedeutete « Radieren ».

Häufig wird die « letzte » Schwenkachse 5 in der Zeichenebene auswandern, sie kann aber auch senkrecht oder schräg zu dieser Ebene auswandern. Deshalb ist es denkbar, zwischen der Schweißelektrode 1 und dem Schwenkarm 2 ein Kugelgelenk oder ein Universalgelenk vorzusehen, um das die beiden Teile gegen Federkraft begrenzt verschwenkbar sind.

Bei dem dargestellten Ausführungsbeispiel überwiegt eine Auswanderungsrichtung. Deshalb ist das Gelenk 8 ein reines Drehgelenk mit einer zur Elektrodenachse 7 senkrechten Drehachse 10. Erfolgt, wie in Fig. 1 angedeutet, das Auswandern der Schwenkachse 5 überwiegend in der Zeichenebene, so verläuft zweckmäßig die Drehachse 10 parallel zur Schwenkachse 5 des Schwenkarms 2.

Bei dem in Fig. 1 und 2 der Zeichnung dargestellten ersten Ausführungsbeispiel ist die Schweißelektrode 1 (mittelbar) in einem Schwenkbock 11 aufgenommen, der seinerseits gegenüber dem Schwenkarm 2 begrenzt verschwenkbar ist. Wie man insbesondere in Fig. 2 erkennt, folgt dies vorzugsweise derart, daß der Schwenkbock 11 über zwei seitliche Gelenkzapfen 12 mit den Schenkeln 13 des am freien Ende U-förmigen Schwenkarms 2 verbunden ist, die den Schwenkbock 11 gabelartig umgreifen.

Gemäß Fig. 1 hat der Schwenkbock 11 und der Schwenkarm 2 einander zugeordnete Anschlagflächen 14 bzw. 15 gegen die sie in Ruhestellung durch das bereits angedeutete Tellerfederpaket 9 aneinandergepreßt sind. Dies sichert eine präzise Ausgangslage der Elektrodenspitze 6 vor jedem Schweißvorgang.

Bei dem in den Fig. 1 und 2 dargestellten Ausführungsbeispiel ist das Tellerfederpaket 9 im Stegbereich 16 des U-förmigen Endes des Schwenkarms 2 angeordnet. Gegen das Tellerfederpaket 9 wirkt ein zur Schwenkachse 5 des Schwenkarms 2 gerichteter Fortsatz 17 des Schwenkbocks 11. Der Fortsatz 17 ist hierzu unten mit einer verschleißfesteren Platte 18 ausgerüstet, die gegen den oben balligen Druckteller 19 eines Führungszapfens 20 wirkt. Die den Führungszapfen 20 umgebenden Tellerfedern des Tellerfederpakets 9 sind mit einer im Stegbereich 16 verschraubbaren und gegen diesen Stegbereich verspannbaren Mutter 21 vorspannbar. Die Vorspannung kann also eingestellt, ggf. auch nachgestellt werden.

Bei dem in Fig. 1 dargestellten Ausführungsbeispiel ist ein die Schweißelektrode 1 tragendes Aufnahmeteil 22 vorgesehen, das seinerseits parallel zur Elektrodenachse 7 gegen die Wirkung eines weiteren Federelements 23 gegenüber dem Schwenkbock 11 verschiebbar ist. Die Verschiebung des Aufnahmeteils 22 unter Wirkung des weiteren Federelements 23 ist durch einen einstellbaren Anschlag 24 begrenzt, der die Ausgangslage des federbelasteten Aufnahmeteils 22 relativ zum Schwenkbock 11 festlegt. Der verstellbare Anschlag 22 ist durch eine in einer zur Elektrodenachse 7 koaxialen Bohrung 25 des Schwenkbocks 11 einschraubbare Anschlagmutter 26 gebildet. Die Anschlagmutter 26 schließt zwischen sich und dem in der Bohrung 25 verschiebbaren Aufnahmeteil 22 das durch ein weiteres Tellerfederpaket gebildete Federelement 23 ein. Die Anschlagmutter 26 ist von einem Gewindefortsatz 27 des Aufnahmeteils 22 durchsetzt, der eine mit der konterbaren Anschlagmutter 26 zusammenwirkende Spannmutter 28 trägt.

Aus den Fig. 1 und 2 wird deutlich, daß die bereits oben beschriebenen Gelenkzapfen 12 durch eine die Schenkel 13 des Schwenkarms 2, den Schwenkbock 11 und ein Langloch 29 des Aufnahmeteils 22 durchsetzende Steckachse 30 gebildet sind.

Das weitere Federelement 23 wird durch den Anpreßdruck der Schweißelektrode 1 auf das Schweißgut ebenfalls vorgespannt, wobei sich das Aufnahmeteil 22 gegenüber dem Schwenkbock 11 etwas nach oben verlagert. Das Federelement 23 bewirkt, daß das Nachsetzen der Elektrodenspitze 6 während des Schweißvorgangs parallel zur Elektrodenachse 7 erfolgt, so daß dieses Nachsetzen keinerlei seitliche Belastungen der Schweißelektrode 1 bzw. der Elektrodenspitze 6 auslöst und auch das eingangs beschriebene « Radieren » vermeidet.

Wie aus dem in Fig. 3 dargestellten weiteren Ausführungsbeispiel entnehmbar ist, kann der Schwenkbock 11' im Abstand und parallel zu der Drehachse 10 wenigstens einen Stützzapfen 31 haben, der als Federelement, das elastisch und begrenzt ein Verschwenken des Schwenkbocks 11' gegenüber dem Schwenkarm 2' zuläßt, eine Gummihülse 32 trägt. Diese Gummihülse ist von Haltefingern 33 des Schwenkarms 2' umgriffen.

Bei dem Ausführungsbeispiel nach Fig. 3 ist der Schwenkbock 11' durch einen zur Elektrodenachse 7 koaxialen Schweißzylinder gebildet.

## Patentansprüche

1. Vorrichtung zum Widerstandsschweißen, insbesondere von Blechen, mit einem antreibbaren Schwenkarm (2), der eine sich zumindest annähernd senkrecht zu ihm erstreckende und gegenüber ihm um ein Gelenk (8) gegen Federkraft begrenzt verschwenkbare Schweißelektrode (1) trägt, dadurch gekennzeichnet, daß das Gelenk (8) etwa in der Elektrodenachse (7) angeordnet ist.

2. Vorrichtung nach Anspruch 1 mit einem die Schweißelektrode (1) tragenden Schwenkbock (11), der an den zwei Schenkeln (13) eines am freien Ende U-förmigen Schwenkarms drehbar gelagert ist, gekennzeichnet durch ein im Stegbereich (16) des U-förmigen Endes des Schwenkarms (2) angeordnetes Federelement (Tellerfederpaket 9), gegen das ein zur Schwenkachse (5) des Schwenkarms (2) gerichteter Fortsatz (17) des Schwenkbocks (11) wirkt.

3. Vorrichtung nach Anspruch 2, gekennzeichnet durch ein die Schweißelektrode (1) tragendes Aufnahmeteil (22), das seinerseits parallel zur Elektrodenachse (7) gegen die Wirkung eines weiteren Federelements (23) gegenüber dem Schwenkbock (11) verschiebbar ist.

4. Vorrichtung nach Anspruch 3, gekennzeichnet durch einen einstellbaren Anschlag (24), der die Ausgangslage des federbelasteten Aufnahmeteils (22) relativ zum Schwenkbock (11) festlegt.

5. Vorrichtung nach Anspruch 4, dadurch gekennzeichnet, daß der verstellbare Anschlag (24) durch eine in einer zur Elektrodenachse (7) koaxialen Bohrung (25) des Schwenkbocks (11) einschraubbare Anschlagmutter (26) gebildet ist, die zwischen sich und dem in der Bohrung (25) verschiebbaren Aufnahmeteil (22) das weitere Federelement (23) einschließt, wobei die Anschlagmutter (26) von einem Gewindefortsatz (27) des Aufnahmeteils (22) durchsetzt ist, der eine mit der Anschlagmutter (26) zusammenwirkende Spannmutter (28) trägt.

6. Vorrichtung nach Anspruch 2 und 3, dadurch gekennzeichnet, daß der Schwenkbock (11) um eine Steckachse (30) schwenkbar ist, die die Schenkel (13) des Schwenkarms (2), den Schwenkbock (11) und ein Langloch (29) des Aufnahmeteils durchsetzt.

7. Vorrichtung nach Anspruch 1, dadurch gekennzeichnet, daß der Schwenkbock (11') im Abstand und parallel zu seiner Drehachse (10) wenigstens einen Stützzapfen (31) aufweist, der als Federelement eine Gummihülse (32) trägt, die von Haltefingern (33) des Schwenkarms (2') umgriffen ist.

8. Vorrichtung nach Anspruch 1, dadurch gekennzeichnet, daß der Schwenkbock (11') durch einen zur Elektrodenachse (7) koaxialen Schweißzylinder gebildet wird.

## Claims

1. Apparatus for carrying out resistance welding, especially of metal sheets, having a drivable pivot arm (2) which carries a welding electrode (1) extending, at least approximately, perpendicularly to the pivot arm and pivotable with respect to it to a limited extent about a joint (8) against spring force, characterised in that the joint (8) is arranged substantially on the axis (7) of the electrode.

2. Apparatus according to Claim 1 having a pivotal mounting (11) which carries the welding electrode (1) and which is rotatably mounted on the two limbs (13) of a pivot arm which is U-shaped at its free ends, characterised by a spring element (dished spring pack 9) arranged in the cross-piece region (16) of the U-shaped end of the pivot arm (2), and by an extension (17) of the pivotal mounting (11) which acts against the spring element and which is directed towards the pivot axis (5) of the pivot arm (2).

3. Apparatus according to Claim 2, characterised by a reception part (22) carrying the welding electrode (1), which part (22) is, in turn, displaceable with respect to the pivotal mounting (11) in a direction parallel to the electrode axis (7) against the action of a further spring element (23).

4. Apparatus according to Claim 3, characterised by an adjustable stop (24) which fixes the initial position of the spring-loaded reception part (22) with respect to the pivotal mounting (11).

5. Apparatus according to Claim 4, characterised in that the adjustable stop (24) is formed by a stop nut (26) screwable into a bore (25) in the pivotal mounting (11) which is coaxial with the electrode axis (7), which nut sandwiches the further spring element (23) between itself and the reception part (22) displaceable in the bore (25), the stop nut (26) being penetrated by a threaded extension (27) of the reception part (22) which carries a locking nut (28) co-operating with the stop nut (26).

6. Apparatus according to Claims 2 and 3, characterised in that the pivotal mounting (11) is pivotable about an inserted spindle (30) which passes through the limbs (13) of the pivot arm (2), the pivotal mounting (11) and a slot (29) in the reception part.

7. Apparatus according to Claim 1, characterised in that the pivotal mounting (11') comprises at least one support journal (31) which is spaced from and lies parallel to the pivotal mounting's rotation axis (10) and which carries, as a spring element, a rubber sleeve (32) around which retaining fingers (33) of the pivot arm (2') grasp.

8. Apparatus according to Claim 1, characterised in that the pivotal mounting (11') is formed by a welding cylinder which is coaxial with the electrode axis (7).

**Revendications**

1. Dispositif pour le soudage par résistance notamment de tôles comprenant un bras pivotant (2), susceptibles d'être entraîné, qui porte une électrode de soudage (1), au moins pratiquement perpendiculaire à ce bras et qui est susceptible de pivoter de manière limitée autour d'une articulation (8) contre la force d'un ressort, caractérisé en ce que l'articulation (8) est prévue sensiblement dans l'axe (7) de l'électrode.

2. Dispositif selon la revendication 1 comportant un bloc pivotant (11) portant l'électrode de soudage (1), bloc qui est monté à rotation sur les deux branches (13) à l'extrémité libre d'un bras pivotant en forme de U, caractérisé en ce qu'un élément à ressort (paquet à ressorts Belleville 9) prévu au niveau de l'entretoise (16) de l'extrémité en forme de U du bras pivotant (2) agit contre un prolongement (17) du bloc pivotant (11), dirigé vers l'axe de pivotement (5) du bras pivotant (2).

3. Dispositif selon la revendication 2, caractérisé par une pièce de réception (22) portant l'électrode de soudage (1), pièce qui peut elle-même coulisser parallèlement à l'axe (7) de l'électrode contre l'effet d'un autre élément à ressort (23) par rapport au bloc pivotant (11).

4. Dispositif selon la revendication 3, caractérisé par une butée (24) réglable qui détermine la position de sortie (position de repos) de la pièce de réception (22) chargée par ressort, par rapport au bloc pivotant (11).

5. Dispositif selon la revendication 4, caractérisé en ce que la butée réglable (24) est formée par un écrou de butée (26) susceptible d'être vissé dans un perçage (25) coaxial à l'axe (7) de l'électrode dans le bloc pivotant (11), écrou qui comprend entre lui et la pièce de réception (22) coulissant dans le perçage (25), l'autre élément à ressort (23), l'écrou de butée (26) étant traversé par un prolongement fileté (27) de la pièce de réception (22), pièce qui porte un écrou de serrage (28) coopérant avec l'écrou de butée (26).

6. Dispositif selon les revendications 2 et 3, caractérisé en ce que le bloc pivotant (11) peut pivoter autour d'un axe enfichable (30) qui traverse les branches (13) du bras pivotant (2), le bloc pivotant (11) et un trou oblong (29) de la pièce de réception.

7. Dispositif selon la revendication 1, caractérisé en ce que le bloc pivotant (11') comporte au moins un goujon d'appui (31) à une certaine distance de son axe de rotation (10) et parallèlement à celui-ci, goujon qui porte une douille en caoutchouc (32) comme élément à ressort, douille qui est entourée par les doigts de fixation (33) du bras pivotant (2').

8. Dispositif selon la revendication 1, caractérisé en ce que le bloc pivotant (11') est formé par un vérin de soudage coaxial à l'axe (7) de l'électrode.

*Fig.1*

*Fig.2*

Fig. 3